Europäisches Patentamt

(19) European Patent Office

Office européen des brevets

(11) EP 0 810 932 B1

(12) **EUROPÄISCHE PATENTSCHRIFT**

(45) Veröffentlichungstag und Bekanntmachung des
Hinweises auf die Patenterteilung:
**24.11.1999 Patentblatt 1999/47**

(21) Anmeldenummer: 96905836.1

(22) Anmeldetag: **01.03.1996**

(51) Int. Cl.$^6$: **B60R 21/26**, F42C 19/08

(86) Internationale Anmeldenummer:
**PCT/EP96/00843**

(87) Internationale Veröffentlichungsnummer:
**WO 96/26851 (06.09.1996 Gazette 1996/40)**

(54) **GASGENERATOR, INSBESONDERE FÜR EINEN AIRBAG, MIT EINEM LADEBEHÄLTER UND
EINEM FLAMMLEITROHR**

GAS GENERATOR, INTENDED IN PARTICULAR FOR USE WITH AN AIRBAG, WITH A CHARGE
CONTAINER AND A FLAME GUIDE PIPE

GENERATEUR DE GAZ, DESTINE EN PARTICULIER A UN AIRBAG, COMPRENANT UN
RECIPIENT A CHARGE ET UN TUYAU DE GUIDAGE DE FLAMMES

(84) Benannte Vertragsstaaten:
**DE ES FR GB IT SE**

(30) Priorität: **02.03.1995 DE 19507208**

(43) Veröffentlichungstag der Anmeldung:
**10.12.1997 Patentblatt 1997/50**

(73) Patentinhaber:
**Dynamit Nobel GmbH Explosivstoff- und
Systemtechnik
53840 Troisdorf (DE)**

(72) Erfinder:
• **BREDE, Uwe
D-90765 Fürth (DE)**

• **KRAFT, Josef
D-92348 Berg (DE)**
• **SCHEIDERER, Gerrit
D-90765 Fürth (DE)**
• **SCHMID, Michael
D-91322 Gräfenburg (DE)**

(74) Vertreter:
**Scherzberg, Andreas, Dr. et al
c/o DYNAMIT NOBEL AKTIENGESELLSCHAFT,
Patentabteilung
53839 Troisdorf (DE)**

(56) Entgegenhaltungen:
**WO-A-94/01307     CH-A- 526 087
DE-B- 1 294 267     US-A- 3 715 131
US-A- 3 972 545     US-A- 5 203 587**

## Beschreibung

Die Erfindung betrifft einen Gasgenerator, insbesondere für einen Airbag, nach dem Oberbegriff des Anspruchs 1.

Ein gattungsgemäßer Gasgenerator ist z.B. aus der DE 43 24 554 A1 bekannt. Dieser bekannte Gasgenerator weist ein zylindrisches Außenrohr auf, das das Gehäuse des Gasgenerators darstellt und dessen offene stirnseitige Enden von Deckelelementen verschlossen sind. In dem Außenrohr ist ein zylindrisches Innenrohr geringeren Durchmessers koaxial angeordnet; dieses Innenrohr begrenzt die Verbrennungskammer, in der ein mittels einer Anzündeinheit zündbares gasentwickelndes Material untergebracht ist, und ist mit mehreren Abströmöffnungen in der Rohrwandung versehen. In dem Ringraum zwischen dem Innen- und dem Außenrohr befindet sich ein Filterelement, das im allgemeinen aus einer Vielzahl von Lagen aus Drahtgeflecht, Stahlwolle und/oder Metallfaservlies besteht. Das aus den Abströmöffnungen des Innenrohres austretende Verbrennungsgas durchströmt die Filterelemente, die feste und flüssige bzw. kondensierte Verbrennungsprodukte aufnehmen, und tritt gereinigt über Gasaustrittsöffnungen im Außenrohr aus.

Um bei allen Temperaturen konstante Öffnungsgasdrücke zu erhalten, ist zur Verdämmung der Abströmöffnungen im Inneren des Innenrohrs ein zumindest teilweise an der Wand anliegendes, gerolltes, sich überlappendes Verdämmungsband angeordnet.

Zur Abdichtung gegenüber Feuchtigkeit sind die Abströmöffnungen auf der Außenseite des Innenrohrs durch ein Abdichtband abgedeckt.

Aus der US-A-4,131,299 ist ein Gasgenerator bekannt, bei dem das gaserzeugende Material in einem Ladebehälter aus einer Metallfolie angeordnet ist. Dies hat den Vorteil, daß auf ein extra Verdämmungsband und Abdichtband verzichtet werden kann. Außerdem ist die Montage des Gasgenerators wesentlich vereinfacht, da der Ladebehälter abseits der eigentlichen Fertigungslinie gefüllt und im verschlossenen Zustand weiterverarbeitet werden kann. Die Sicherheit ist dadurch wesentlich erhöht.

Aus der DE 43 93 229 T1 ist eine Gasgeneratoranordnung mit einem Flammleitrohr bekannt. Dieses erstreckt sich in Axialrichtung des Gehäuses und ist mit einer Vielzahl von Öffnungen versehen, die in der Seitenwand des Flammleitrohres ausgebildet sind. Die Außenseite des Flammleitrohres legt somit die Flammenführung fest. Außerdem sind noch Verstärkungsladungen im Flammleitrohr untergebracht. Die Stoßwelle oder Flamme der Anzündladung bzw. Verstärkungsladung bewegt sich durch das Flammleitrohr und gelangt durch die Öffnungen in die gaserzeugende Ladung und entzündet diese. Die Anzahl und Position der Öffnungen ist so gewählt, daß die gaserzeugende Ladung "überzündet" wird. Das bedeutet, daß die gaserzeugende Ladung an einer Vielzahl unterschiedlicher Stellen gezündet wird, um zu gewährleisten, daß der Druck des erzeugten Gases keine unerwünschten Druckspitzen zeigt, um ein kontrolliertes Abbrennen sicherzustellen.

Der Erfindung liegt die Aufgabe zugrunde, einen Gasgenerator nach dem Oberbegriff des Anspruchs 1 derart zu verbessern, daß einerseits die gaserzeugende Ladung bei der Montage sicher und leicht zu handhaben ist und andererseits der Brennkammerdruck und damit die Generatorleistung einstellbar ist.

Erfindungsgemäß wird diese Aufgabe dadurch gelöst, daß das gasentwickelnde Material in einem hermetisch geschlossenen Ladebehälter angeordnet ist, und daß im Ladebehälter ein Flammleitrohr angeordnet ist, welches mit dem Ladebehälter einstückig geformt ist und nur eine Flammaustrittsöffnung aufweist.

Die Verwendung eines hermetisch geschlossenen Ladebehälters hat den Vorteil, daß kein Verdämmungsband und kein Abdichtband verwendet werden muß. Außerdem ist die Montage wesentlich vereinfacht. Die Verwendung eines Flammleitrohres, welches nur eine Flammaustrittsöffnung aufweist, erlaubt es, den Brennkammerdruck an die Erfordernisse anzupassen. Dadurch, daß das Flammleitrohr einstückig mit dem Ladebehälter geformt ist, ist dieser kostengünstig herzustellen.

Vorteilhafterweise berechnet sich der Abstand a des Zentrums der Flammaustrittsöffnung zum Zentrum der Abströmöffnungen des Innenrohres nach der Formel

$$a = d \pm 50\%,$$

wobei d der Innendurchmesser des Innenrohres ist. Hierdurch ergibt sich ein optimaler Brennkammerdruck. Diese Formel bedeutet, daß der Abstand a im Bereich zwischen d - 50 % und d + 50 %, d.h. zwischen 0,5 d und 1,5 d liegt.

In bevorzugter Ausführungsform beträgt der Abstand a ungefähr 80 % des Innendurchmessers d des Innenrohres.

Erfindungsgemäß ist der Ladebehälter ein im Fließpreßverfahren oder Tiefziehverfahren aus Aluminium gefertigter dosenähnlicher Behälter, der mit einem Deckel verschlossen ist. Das Flammleitrohr ist dabei zweckmäßigerweise auf der dem Deckel abgewandten Stirnseite des Behälters angeordnet.

Vorteilhafterweise ist der Deckel mit dem Behälter über eine Falzung verschlossen und der Bodenbereich des Ladebehälters ist mit dem angeformten Flammleitrohr verstärkt ausgebildet.

Damit der Anzündstrahl des Anzündelementes in das Flammleitrohr gelangen kann, ist zweckmäßigerweise die Wanddicke des Ladebehälters vor dem Flammleitrohr als Membran ausgebildet.

In bevorzugter Ausführungsform beträgt die Wanddicke des Ladebehälters ungefähr 0,5 mm und die Wanddicke der Membran ungefähr 0,15 mm.

Im Ladebehälter ist vorteilhafterweise ein federndes Scheibenelement bzw. ein Keramikfaserring als Dämpfungselement und Volumenausgleich angeordnet. Hierdurch ist die gaserzeugende Ladung stoßgeschützt untergebracht.

Sollte es erforderlich sein, so kann auch im Flammleitrohr noch eine Verstärkungsladung untergebracht werden.

Weitere Merkmale ergeben sich aus den Figuren, die nachfolgend eingehend beschrieben werden. Es zeigt:

Fig. 1    einen erfindungsgemäßen Gasgenerator im Schnitt und

Fig. 2    den Ladebehälter gemäß Fig. 1 im vergrößerten Maßstab.

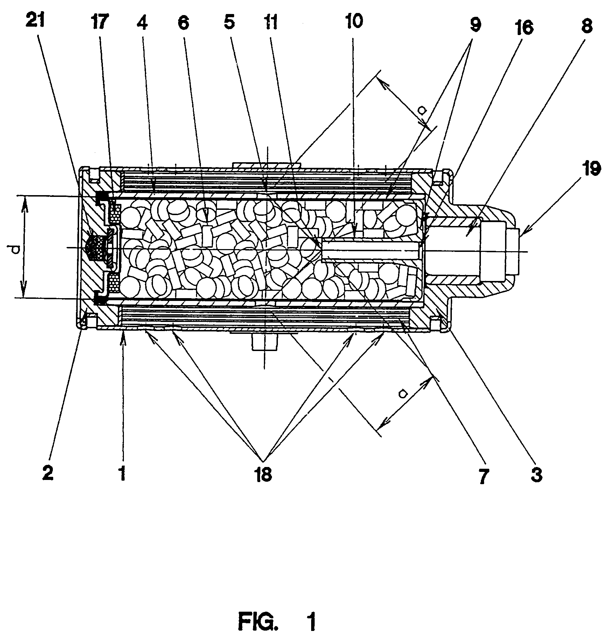

In Fig. 1 ist ein Gasgenerator, insbesondere für ein Kraftfahrzeuginsassen-Aufprallschutzkissen (auch "Airbag" genannt) dargestellt. Der Gasgenerator weist ein Außenrohr 1 aus Edelstahl auf, in dessen Mantel mehrere Gasaustrittsöffnungen 18 ausgebildet sind. Die Gasaustrittsöffnungen 18 sind gleichmäßig verteilt über vier Umfangslinien des Außenrohrs 1 angeordnet. Die Gasaustrittsöffnungen 18 befinden sich im wesentlichen im - in axialer Längserstreckung des Gasgenerators betrachtet - äußeren Abschnitt des Außenrohrs 1. Innerhalb des Außenrohrs 1 ist ein koaxial zu diesem angeordnetes Innenrohr 4 aus Edelstahl untergebracht. In der Mitte des Mantels des Innenrohrs 4 sind ebenfalls Abströmöffnungen 5 ausgebildet, wobei diese Abströmöffnungen 5 gleichmäßig auf einer Umfangslinie des Innenrohrs 4 verteilt angeordnet sind. Zwischen den Gasaustrittsöffnungen 18 des Außenrohrs 1 und den Abströmöffnungen 5 des Innenrohrs 4 besteht also ein axialer Abstand.

Der Außendurchmesser des Innenrohrs 4 ist kleiner als der Innendurchmesser des Außenrohrs 1, so daß zwischen dem Außen- und dem Innenrohr 1, 4, wie schon beschrieben, ein Ringraum besteht. Dieser Ringraum ist mit Filterelementen 7 (z.B. Edelstahl-Drahtgeflechtmatten) ausgefüllt.

Das Innenrohr 4 bzw. ein in ihm angeordneter Ladebehälter 9 ist mit gasentwickelndem Material 6 gefüllt, das bei seiner Verbrennung Druckgas erzeugt. Das gasentwickelnde Material 6, auch druckgaserzeugende Ladung genannt, liegt in Form von sogenannten Pellets vor, die ungeordnet in dem Ladebehälter 9 untergebracht sind. Eine elektrische Anzündeinheit 8 zum Zünden des gasentwickelnden Materials 6 ist an einem Deckelelement 3 befestigt und ragt bis vor die Stirnseite des Ladebehälters 9. Über einen Stecker 19 ist die Anzündeinheit 8 an eine Elektronik anschließbar.

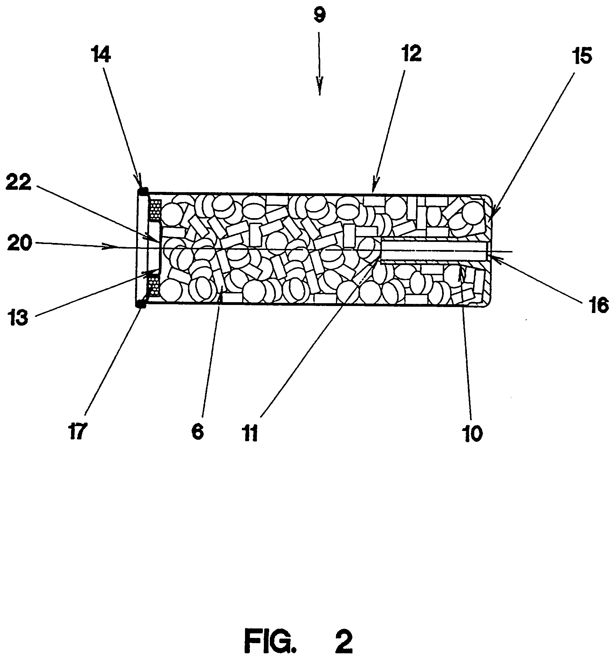

Der Ladebehälter 9 besteht aus einem aus Aluminium im Fließpreßverfahren oder Tiefziehverfahren gefertigten Behälter 12, der mit einem Deckel 13 verschlossen ist. (Siehe hierzu besonders Fig. 2, die den Ladebehälter 9 aus Fig. 1 im vergrößerten Maßstab zeigt.) Der Bodenbereich 15 des Behälters 12 ist verstärkt ausgebildet. An ihm ist ein in das Innere des Ladebehälters 9 ragendes Flammleitrohr 10 angeformt. Das Flammleitrohr 10 ist mittig auf der Längsachse 20 des Ladebehälters 9 angeordnet. Das stirnseitige Ende des Flammleitrohres 9 ist mit einer Membran 16 verschlossen, die vom Anzündstrahl der Anzündeinheit 8 durchschlagen wird. Der Deckel 13 ist auf der dem Flammleitrohr 10 gegenüberliegenden Stirnseite angeordnet. Der Rand des Deckels 13 ist mit dem Behälter 12 über eine Falzung 14 gasdicht verbunden. Zur Abdichtung ist die Dichtungsstelle vor der Falzung mit einem Dichtungsmittel wie z.B. Synthesekautschuk versehen. Im Inneren des Ladebehälters 9 ist die gaserzeugende Ladung 6 in Form von sogenannten Pellets angeordnet.

Auf der Innenseite des Deckels 13 sind federelastische, kompressible Scheibenelemente 17 aus Keramikfilz oder -gewebe angeordnet, die einerseits gegen die Pellets und andererseits gegen die Innenflächen des Deckels 13 abgestützt sind, wobei sie die Pellets mit Federkraft zusammenhalten. Die federnden Scheibenelemente 17 haben die Aufgabe, die Füllmengentoleranzen des Ladebehälters 9 auszugleichen und die Pellets auch dann zusammenzuhalten, wenn der Ladebehälter 9 nicht vollständig mit gasentwickelndem Material 6 ausgefüllt ist oder sich im Laufe der Zeit durch Vibrationen die Packungsdichte der Pellets erhöht.

Im Deckelelement 2 ist außerdem noch eine thermische Sicherung 21 vorgesehen, die bei Gefahr, d.h. bei zu hohen Umgebungstemperaturen einen Abbrand des gasentwickelnden Materials 6 einleitet. Der Deckel 13 ist hierzu an der der thermischen Sicherung 21 gegenüberliegenden Seite mit einer Membran 22 versehen.

Ein wesentliches Merkmal der Erfindung ist die Länge des Flammleitrohres 10. Der Abstand a (siehe Fig. 1) des Zentrums der Flammaustrittsöffnung 11 zum Zentrum der Abströmöffnungen 5 im Innenrohr 4 ist nach der Formel

$$a = d \pm 50\,\%$$

zu berechnen, wobei d der Innendurchmesser des Innenrohres 4 ist. Bevorzugt beträgt der Abstand a ungefähr 80 % des Innendurchmessers d des Innenrohres 4. Hierdurch verläuft der Brennkammerdruck in den gewünschten Größenordnungen ab.

Nachfolgend soll die Funktionsweise des in Fig. 1 dargestellten Gasgenerators beschrieben werden. Die elektrische Anzündeinheit 8, bei der es sich z.B. um einen sogenannten Schichtbrückenzünder mit Initialzündstoff handelt, wird durch einen definierten elektrischen Impuls gezündet. Bei Verwendung des Gasgenerators gemäß Fig. 1 als Druckgaserzeuger in einem Fahrzeug-Airbag wird dieser elektrische Impuls beispielsweise durch Schließen eines Trägheitsschalters im Falle eines Zusammenstoßes des Kraftfahrzeuges mit einem anderen Gegenstand an die Anzündeinheit 8 angelegt. In der Anzündeinheit 8 wird eine sogenannte Verstärkungsladung gezündet; die dabei entstehenden Anzündschwaden (Flamme, Gas, heiße Verbrennungsprodukte) gelangen über die Membran 16 und das Flammleitrohr 10 in das gasentwickelnde Material 6, wo sie die (Treibladungs-) Pellets zünden. Die heißen Gase gelangen über die Abströmöffnungen 5 zu den Filterelementen 7. Die Filterelemente 7 haben die Aufgabe, die Gase zu kühlen und von Partikeln (Feststoffen) und Kondensaten zu reinigen. Die derart abgekühlten und gereinigten Gase treten über die Gasaustrittsöffnungen 18 im Außenrohr 1 aus.

Bevor die heißen Gase durch die Abströmöffnungen 5 das Innenrohr 4 verlassen können, muß der Gasdruck so hoch sein, daß der Ladebehälter 9 aufgerissen wird.

**Patentansprüche**

1. Gasgenerator, insbesondere für einen Airbag, mit einem zylindrischen Außenrohr (1), dessen offene stirnseitige Enden von Deckelelementen (2,3) verschlossen sind, mit einem koaxial im Inneren des Außenrohres (1) angeordneten Innenrohr (4) geringeren Durchmessers, welches Abströmöffnungen (5) aufweist, mit einem zündbaren gasentwickelnden Material (6) im Inneren des Innenrohres (4), mit Filterelementen (7) im Ringraum zwischen dem Innenrohr (4) und dem Außenrohr (1) und mit einer Anzündeinheit (8) zur Zündung des gasentwickelnden Materials (6), **dadurch gekennzeichnet,**

   - daß das gasentwickelnde Material (6) in einem hermetisch geschlossenen Ladebehälter (9) angeordnet ist und
   - daß im Ladebehälter (9) ein Flammleitrohr (10) angeordnet ist,
   - welches mit dem Ladebehälter (9) einstückig geformt ist
   - und nur eine Flammaustrittsöffnung (11) aufweist.

2. Gasgenerator nach Anspruch 1, **dadurch gekennzeichnet,** daß sich der Abstand a des Zentrums der Flammaustrittsöffnung (11) zum Zentrum der Abströmöffnungen (5) des Innenrohres (4) nach der Formel

$$a = d \pm 50\,\%$$

berechnet, wobei d der Innendurchmesser des Innenrohres (4) ist.

3. Gasgenerator nach Anspruch 1 oder 2, **dadurch gekennzeichnet,** daß der Abstand a bevorzugt ungefähr 80 % des Innendurchmessers d des Innenrohres (4) ist.

4. Gasgenerator nach einem der Ansprüche 1 bis 3, **dadurch gekennzeichnet,** daß der Ladebehälter (9) ein im Fließpreßverfahren oder Tiefziehverfahren aus Aluminium gefertigter dosenähnlicher Behälter (12) ist, der mit einem Deckel (13) verschlossen ist.

5. Gasgenerator nach Anspruch 4, **dadurch gekennzeichnet,** daß der Deckel (13) mit dem Behälter (12) über eine Falzung (14) verschlossen ist.

6. Gasgenerator nach einem der Ansprüche 1 bis 5, **dadurch gekennzeichnet,** daß der Bodenbereich (15) des Ladebehälters (9) mit dem angeformten Flammleitrohr (10) verstärkt ausgebildet ist.

7. Gasgenerator nach einem der Ansprüche 1 bis 6, **dadurch gekennzeichnet,** daß die Wanddicke des Ladebehälters (9) vor dem Flammleitrohr (10) als Membran (16) ausgebildet ist.

8. Gasgenerator nach Anspruch 7, **dadurch gekennzeichnet,** daß im Ladebehälter (9) ein federndes Scheibenelement (17) bzw. ein Keramikfaserring als Dämpfungselement und Volumenausgleich angeordnet ist.

9. Gasgenerator nach einem der Ansprüche 7 bis 8, **dadurch gekennzeichnet,** daß die Wanddicke des Ladebehälters (9) ungefähr 0,5 mm und die Wanddicke der Membran (16) ungefähr 0,15 mm beträgt.

**Claims**

1. Gas generator, particularly for an airbag, having a cylindrical outer tube (1), the open front ends of which are sealed by cover elements (2, 3), an outer tube (4) of smaller diameter which is arranged coaxially inside the outer tube (1) and has discharge apertures (5), an ignitable gas-producing material (6) inside the inner tube (4), filter elements (7) in the annular chamber between the inner tube (4) and the outer tube (1) and an ignition unit (8) to ignite the gas-producing material (6), characterized in that

   - the gas-producing material (6) is arranged in a hermetically sealed charge container (9) and
   - that a flame guide tube (10) is arranged in the charge container (9),
   - which flame guide tube is formed in one piece with the charge container (9)
   - and has only one flame outlet aperture (11).

2.  Gas generator according to Claim 1, characterized in that the distance a between the centre of the flame outlet aperture (11) and the centre of the discharge apertures (5) of the inner tube (4) is calculated according to the formula

    a = d ± 50%,

    wherein d is the internal diameter of the inner tube (4).

3.  Gas generator according to Claim 1 or 2, characterized in that the distance a is preferably approximately 80% of the internal diameter d of the inner tube (4).

4.  Gas generator according to one of Claims 1 to 3, characterized in that the charge container (9) is a box-type container (12) made of aluminium by extrusion or deep-drawing, which is sealed with a cover (13).

5.  Gas generator according to Claim 4, characterized in that the cover (13) is sealed to the container (12) via a fold (14).

6.  Gas generator according to one of Claims 1 to 5, characterized in that the base region (15) of the charge container (9) is formed in a reinforcing manner with the moulded-on flame guide tube (10).

7.  Gas generator according to one of Claims 1 to 6, characterized in that the wall thickness of the charge container (9) upstream of the flame guide tube (10) is designed as a diaphragm (16).

8.  Gas generator according to Claim 7, characterized in that a spring-loaded disc element (17) and/or a ceramic fibre ring is arranged in the charge container (9) as a damping element and volume equalizer.

9.  Gas generator according to one of Claims 7 to 8, characterized in that the wall thickness of the charge container (9) is approximately 0.5 mm and the wall thickness of the membrane (16) is approximately 0.15 mm.

## Revendications

1.  Générateur de gaz, destiné en particulier à un coussin gonflable, comprenant un tube extérieur (1) cylindrique, dont les extrémités frontales ouvertes sont obturées par des éléments formant couvercles (2, 3), un tube intérieur (4) de diamètre plus petit, qui est disposé à l'intérieur du tube extérieur (1), coaxialement à celui-ci, et est pourvu d'orifices d'écoulement (5), une substance inflammable (6) génératrice de gaz disposée à l'intérieur du tube intérieur (4), des éléments filtres (7) disposés dans l'espace annulaire entre le tube intérieur (4) et le tube extérieur (1) ainsi qu'une unité d'amorçage (8) pour allumer la substance génératrice de gaz (6), caractérisé par le fait

    -   que la substance génératrice de gaz (6) est placée dans un récipient à charge (9) fermé hermétiquement et
    -   qu'un tube guide-flamme (10) est disposé dans le récipient à charge (9),
    -   lequel tube guide-flamme est formé d'une pièce avec le récipient à charge (9)
    -   et comporte un orifice de sortie de flamme (11) unique.

2.  Générateur de gaz selon la revendication 1, caractérisé par le fait que la distance a du centre de l'orifice de sortie de flamme (11) au centre des orifices d'écoulement (5) du tube intérieur (4) est calculée selon la formule

    a=d±50%,

    d étant le diamètre intérieur du tube intérieur (4).

3.  Générateur de gaz selon la revendication 1 ou 2, caractérisé par le fait que la distance a de préférence est égale à environ 80% du diamètre intérieur d du tube intérieur (4).

4.  Générateur de gaz selon une des revendications 1 à 3, caractérisé par le fait que le récipient à charge (9) est un récipient (12) de type boîte de conserve qui est fabriqué en aluminium, selon un procédé de formage par fluage ou un procédé d'emboutissage, profond et est fermé par un couvercle (13).

5.  Générateur de gaz selon la revendication 4, caractérisé par le fait que le couvercle (13) est lié au récipient (12) par agrafage (14).

6.  Générateur de gaz selon une des revendications 1 à 5, caractérisé par le fait que la zone de fond (15) du récipient à charge (9) avec le tube guide-flammes (10) attenant est renforcée.

7.  Générateur de gaz selon une des revendications 1 à 6, caractérisé par le fait que la paroi du récipient à charge (9) devant le tube guideflammes (10) est conformée en membrane (16).

8.  Générateur de gaz selon la revendication 7, caractérisé par le fait qu'un élément en forme de rondelle élastique (17) ou un anneau de fibres céramiques est disposé dans le récipient à charge (9) en tant qu'élément d'amortissement et qu'élément de compensation de volume.

9. Générateur de gaz selon une des revendications 7 à 8, caractérisé par le fait que l'épaisseur de paroi du récipient à charge (9) est d'environ 0,5 mm et l'épaisseur de paroi de la membrane (16) est d'environ 0,15mm.

FIG. 1

FIG. 2